# EUROPEAN PATENT SPECIFICATION

(11) **EP 2 367 713 B1**
(45) Date of publication and mention of the grant of the patent: **06.08.2014**
(21) Application number: 08875497.3
(22) Date of filing: 19.12.2008
(51) Int. Cl.: B62D 55/084

(54) **LOCK APPARATUS FOR VARIABLE GAUGE UNDERCARRIAGE**
VERRIEGELUNGSVORRICHTUNG FÜR EIN UNTERGESTELL MIT VERÄNDERLICHER SPURWEITE
APPAREIL DE VERROUILLAGE POUR TRAIN ROULANT À ÉCARTEMENT VARIABLE

(43) Date of publication of application: 28.09.2011
(73) Proprietor: Caterpillar Commercial S.A.R.L., 93208 Paris, Saint-Denis (FR)
(72) Inventor: GALLIGNANI, Luigi, I-40026 Imola (IT)
(74) Representative: Modiano, Micaela Nadia
(86) International application number: PCT/EP2008/068031
(87) International publication number: WO 2010/069396

(56) References cited:
- EP-B1- 0 883 543
- WO-A-2008/050229
- GB-A- 1 463 677
- JP-A- 2002 293 237
- US-A- 5 489 114
- US-A- 5 716 071
- US-B1- 7 163 227

## Description

### Technical Field

This disclosure relates to variable gauge undercarriages of vehicles. This disclosure relates, more particularly, to a lock apparatus for variable gauge track laying undercarriages.

### Background

Track laying undercarriages with variable gauges are generally known. Such undercarriages may comprise of a central frame which may be adapted to support operating machinery such as earth moving machines and cranes, and lateral sub-frames which may support the tracks. The sub-frames may flank the central frame. Movement of the tracks may be attained through translational motors carried in the sub-frames.

Various engineering vehicles, such as cranes, excavators or earth movers, may incorporate a variable gauge undercarriage. The variable gauge undercarriages may be restricted in width for transportation of the engineering vehicle, while during operation the undercarriage of the engineering vehicle may be extended as the vehicle may be required to perform certain functions, such as excavating or transporting earth or other functions in which the general performance of the machine is contingent on ground stability. Particularly, the width of the undercarriage, i.e. the distance between its two side tracks, may be increased during operation in order to have large ground stability dimensions.

Commonly, the change in the width of the undercarriage, through lateral movement of the sub-frames may be achieved by means of hydraulic actuators, usually constituted by hydraulic cylinders installed on the vehicle. The central frame and sub-frames may be coupled to each other through cross-members. The cross members may slide in opposite directions to retract the sub-frames closer to the central frame or to extend the sub-frames further from the central frame.

Variable gauge track-laying undercarriages may be provided with locks for restricting the movement of the cross-members.

EP1133430 describes a variable gauge track-laying undercarriage which may comprise a main frame and two flanking sub-frames, each for supporting respective driving tracks of the undercarriage. The main frame may present in correspondence with each sub-frame at least a respective seat, for the sliding of a corresponding beam element extending from the respective sub-frame. Means may be provided for moving said first and second sub-frame between at least a first position with reduced track gauge, and a second position with widened track gauge. The undercarriage may comprise locking means for blocking the sliding of the respective beam elements within the corresponding seat. The means may comprise a first inclined surface positioned within the respective seat and a second inclined surface positioned in correspondence with the outer profile of the respective beam element and co-operating with said first inclined surface to fasten the beam element within the respective seat.

The locking means of EP1133430 for locking beams may operate at the widest track gauge and narrowest track gauge positions, and may not operate at intermediate positions.

WO2008050229 describes a track-laying undercarriage which may comprise a main frame and two sub-frames for supporting tracks, and beams for supporting respective sub-frames which are mobile relative to the main frame in order to vary the track gauge of the undercarriage. The undercarriage may comprise locking means for positioning and securely holding a respective sub-frame in a position. The locking means are first disengaged from the beams prior to varying the track gauge and then activated to a lock the beams in position. The locking means are operated by actuating means which drive the locking means to engage or disengage.

The locking means of WO2008050229 may not operate actively to engage the beams. A passive actuator is activated for moving the locking means into engagement with the beams.

Patent EP0973673, in the name of Caterpillar Inc, describes a variable gauge track-laying undercarriage which comprises a central frame with two lateral sub-frames. The central frame and the sub-frames may be fixed together in correspondence with the ends of the central frame within which are telescopic hydraulic cylinders and slide frames for the sub-frames. The undercarriage further includes a mechanical locking device for locking the central frame and the sub-frames against relative movement in a position of use so as to provide a further control for the geometric stability in use. A spring provides a force for the mechanical locking devices to actively engage the relatively moveable central and sub-frames. A control is required to overcome the force for disengagement of the mechanical locking device. Upon release by the control the mechanical locking device returns to active engagement of the frames.

The mechanical locking device of EP0973673 may operate actively to engage the frames. However, control for disengaging the mechanical locking means may be distinct from the control for the varying the gauge of the undercarriage.

Patent EP0883543, in the name of Caterpillar Inc, describes an apparatus according to the preamble of claim 1 for locking the gauge of a variable gauge undercarriage. The undercarriage may include tracks connected by intermediate beams supported by a frame mounted on support guides, provided with annular plates facing the tracks. The beams may comprise beam elements mounted telescopically within one another so as to be guided for relative movement. The undercarriage may also have telescopic cylinders within the beams and which are connected to the beam elements so as to cause relative telescopic movement thereof towards and away from each other. The apparatus may include a device for actuating the relative sliding of the beam elements and for locking the beam elements when the desired gauge of the undercarriage is reached. A play-compensation apparatus may be operatively located between the support guides of the frame and the beams.

The present disclosure is directed, at least in part, to improving or overcoming one or more aspects of the prior art system.

### Brief Summary of the Invention

In a first aspect, the present disclosure describes a locking apparatus for a hydraulic cylinder of a variable gauge undercarriage comprising a lock member to engage a sliding member, longitudinal movement of the sliding member relative to the lock member determines the width of the variable gauge undercarriage; an engagement actuator to bias the lock member to an engaged position; and a disengagement actuator operably coupled to a control circuit and connected to the lock member for disengaging the lock member from the sliding member.

The sliding member may be operably coupled to the control circuit and the control circuit may be arranged to hydraulically activate the disengagement actuator prior to activation of the member.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is a schematic representation of a first embodiment of a lock apparatus for mere illustration;
Fig. 2 is a cross-sectional view of the first lock apparatus for mere illustration;
Fig. 3 is a cross-sectional view of the lock apparatus of Fig.2 along the plane III-III;
Fig. 4 is a schematic representation of the control circuit for the control of the lock apparatus according to the present disclosure;
Fig. 5 is a cross-sectional view of the lock apparatus according to the present invention; and
Fig. 6 is a cross-sectional view of a variable gauge undercarriage incorporating an embodiment of the lock apparatus according to the present disclosure.

### Detailed Description

This disclosure generally relates to a lock apparatus for locking a hydraulic cylinder of variable gauge undercarriage of a vehicle.

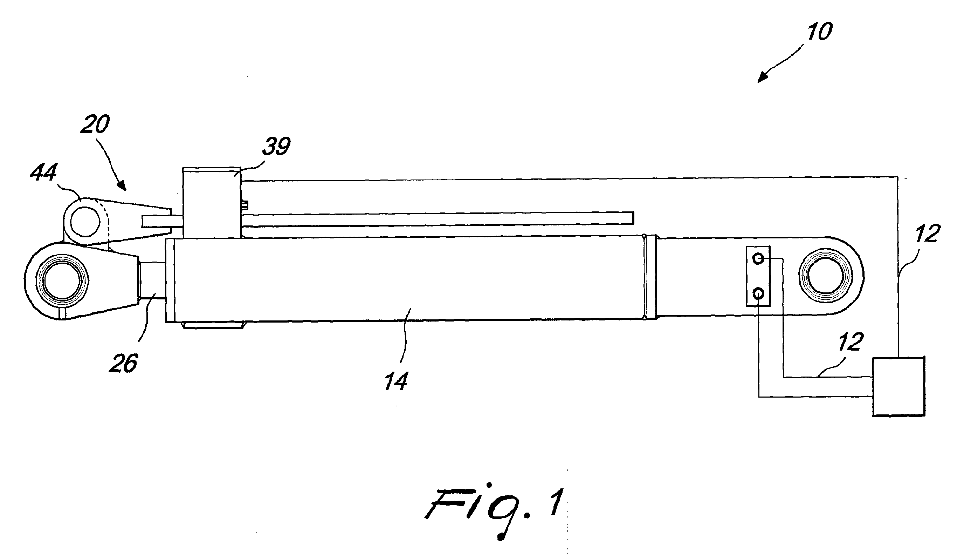

Figs. 1 - 3 illustrates said first embodiment of a lock apparatus **10.** The lock apparatus **10** may comprise a hydraulic cylinder **14,** a lock member **16,** an engagement actuator **17,** a disengagement actuator **18** and a sliding member. The lock apparatus **10** may be controlled by a a control circuit **12.** In the first embodiment the sliding member may be a rail **20.**

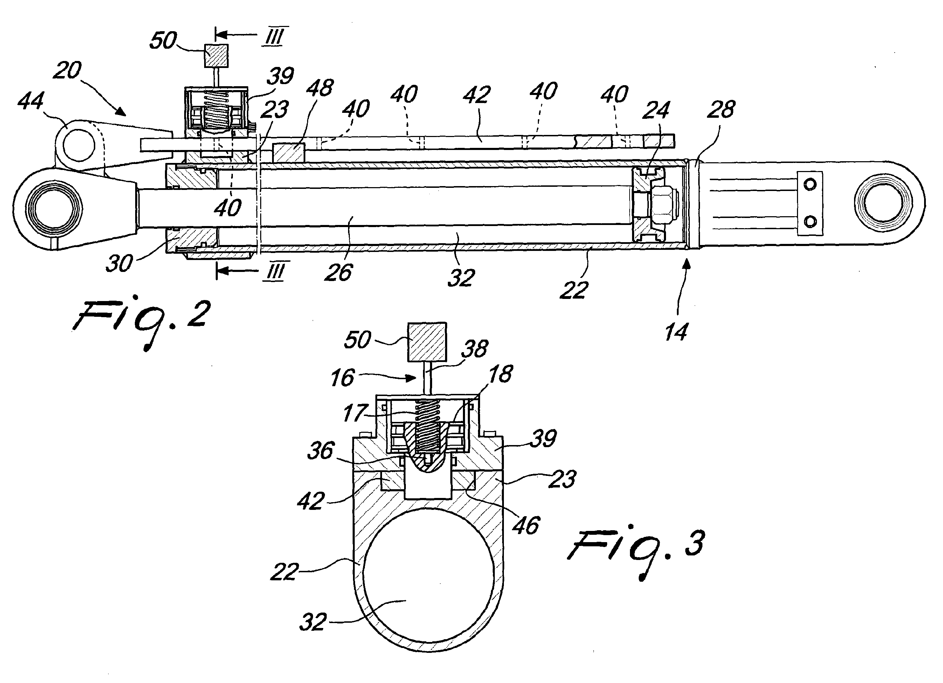

With reference to Fig. 2, the hydraulic cylinder **14** may include a cylindrical barrel **22** and a piston **24,** which may be connected to a piston rod **26.** The barrel **22** may be closed at one end by a cylinder bottom **28** and at an opposite end by a cylinder head **30.** The piston rod 26 may project out of the barrel **22** through the cylinder head **30.** The piston **24** may include sliding rings and seals.

The interior of the barrel **22** may be a bore **32.** Piston **24** and piston rod **26** may move within the bore **32** in a linear motion along the central axis of the barrel **22.** The piston **24** may divide the bore **32** in two chambers, a bottom chamber and a piston rod side chamber. A hydraulic pressure from a hydraulic fluid acts on the piston **24** at the bottom chamber. The hydraulic cylinder **14** may further include a cylinder valve.

The hydraulic cylinder **14** may further comprise a bracket **39,** which may be assembled to the barrel **22.** A frame **23** may protrude from the barrel **22** for connection to the bracket **39.**

The extension and retraction of the piston rod 26 of a hydraulic cylinder **14** may effect corresponding movements of the variable gauge undercarriage **54.** The hydraulic cylinder **14** may be a telescope cylinder.

Lock member **16** may he suitably provided to restrict extension or retraction of the variable gauge undercarriage **54.** The lock member **16** may restrict the extension or retraction of the sliding member and thereby restrict an extension or retraction of a lateral carriage **58** in the variable gauge undercarriage **54.**

The lock member **16** may be positioned adjacent to the hydraulic cylinder **14.** With reference Fig. 3, the lock member **16** may be installed within the bracket **39.**

The lock member **16** may comprise a contact portion **36** and an actuation portion **38.** The contact portion **36** and the actuation portion **38** may be connected by any suitable means so that the actuation portion **38** may regulate the movement of the contact portion **36.**

The lock member **16** may be moveable between an engaged position and a disengaged position. The contact portion **36** may be suitably formed to couple to the sliding member and in the engaged position the contact portion **36** may couple to the sliding member to lock the sliding member. Longitudinal movement of the locked sliding member may be restrained. In the engaged position of the lock member **16** variation in width of the variable gauge undercarriage **54,** through extension or retraction, thereof may be restricted.

In the disengaged position of the lock member **16,** the contact portion **36** may be separated from the sliding member and the sliding member may be unrestrained. The sliding member may be extended or retracted to effect corresponding movements in the variable gauge undercarriage **54.**

The contact portion **36** may be in a form of a male member or a female member to contact and couple to a reciprocal portion on the sliding member. In an embodiment as illustrated in fig. 3 the contact portion **36** may be a pin. In the engaged position the pin may be advanced to engaged position and may be retracted to the disengaged positioned.

In another embodiment the contact portion **36** may be a clamp. The jaws of the clamp may be toggled to the engaged position or may be toggled to the disengaged positioned.

The actuation portion **38** may be connected to the contact portion **36** whereby a movement of the actuation portion **38** effects a corresponding movement of the contact portion **36.** The actuation portion **38** may be actuated by the engagement actuator **17** and the disengagement actuator **18** in alternate directions, for instance in opposite directions.

Actuation by the engagement actuator **17** effects a movement of the actuation portion **38.** The actuation portion **38** in turn effects a corresponding movement of the contact portion **36** into the engaged position.

Actuation by the disengagement actuator **18** effects a movement of the actuation portion **38.** The actuation portion **38** in turn effects a corresponding movement of the contact portion **36** into the disengaged position.

With reference to Fig. 3, in an embodiment the actuation portion **38** may be a shaft connected to the contact portion **36** in the form of a pin.

Sliding member may comprise a reciprocal contact portion **40.** The contact portion **36** of the lock member **16** may couple to the reciprocal contact portion **40.** At an engaged position the reciprocal contact portion **40** and the contact portion **36** are coupled so that the sliding member is restrained from further extension or retraction by the lock member **16.**

Reciprocal contact portions **40** may be suitably formed to couple to the contact portion **36.** For instance, reciprocal contact portion **40** may be a reciprocal male member or female member to contact and couple to the corresponding contact portion **36.** In the embodiment wherein the contact portion **36** is a pin the reciprocal contact portion **40** may be a hole to receive and engage the pin. In the embodiment wherein the contact portion **36** is a clamp the reciprocal contact portion **40** may be a cleft to receive and engage the jaws of the clamp.

Sliding member may comprise a series of reciprocal contact portions **40** spaced along the longitudinal axis of the sliding member. The reciprocal contact portions **40** may be regularly spaced. Terminal reciprocal contact portions **40** may be positioned towards both ends of the sliding bar and an intermediate reciprocal contact portion **40** may be positioned at a position partway between the two terminal positions. In another embodiment, further intermediate reciprocal contact portions **40** may be provided on the sliding bar.

A first terminal reciprocal contact portion **40** may correspond to a maximum extension of the variable gauge undercarriage **54,** the second terminal reciprocal contact portion **40** may correspond to a minimum retraction of the variable gauge undercarriage **54** and the intermediate terminal reciprocal contact portion **40** may correspond to an intermediate position between the maximum and minimum positions.

Restriction of longitudinal movement of the sliding member at the terminal and intermediate reciprocal contact portions **40** may correspondingly restrict the variable gauge undercarriage **54** at the corresponding extended, retracted or intermediate positions.

Sliding member in the first embodiment may be rail **20** which may, for mere illustration comprise a bar **42** and a link element **44.** The bar **42** and the link element **44** may be connected together by suitable means to form a rigid connection. Rail **20** may be positioned adjacent the hydraulic cylinder **14.**

With reference to Fig. 3, the frame **23** may include a channel **46**, for mere illustration to slidingly receive bar 42. Within channel 46 bar 42 may be in contact with bracket **39** along a surface.

The bar **42**, for mere illustration may comprise a reciprocal contact portion **40.** The bar **42** may comprise a series of reciprocal contact portions **40** including terminal reciprocal contact portions **40,** at an end towards the link element **44** and at the opposite end, and an intermediate reciprocal contact portion **40** partway between the two terminal positions. In another embodiment, bar **42** may, for mere illustration include further intermediate reciprocal contact portions **40.**

The link element **44** may be rigidly connected to the piston rod **26.** The rigid connection may effect a concerted movement between rail **20** and the piston rod **26** in response to a movement by the piston rod **26.** Conversely, restricting movement of the rail **20** may restrict movement of the piston rod **26.** With the lock member **16** in the engaged position, contact portion **36** may engage with rail **20** and extension or retraction of the piston rod **26** may be restricted and the variable gauge undercarriage **54** may be locked in a specific position. This position may correspond to one of a series of reciprocal contact portions **40** along the bar **42** of rail **20.** The positions may correspond to either terminal reciprocal contact portions **40** or the intermediate reciprocal contact portions **40.**

Engagement actuator **17** may act on the actuation portion **38** of the lock member **16.** The engagement actuator **17** effects a force on the lock member **16** to move to the engaged position. In an embodiment, the force exerted by the engagement actuator **17** is constant. Due to the continuous action of the engagement actuator **17** the lock member **16** may be constantly biased into the engaged position.

The lock member **16** may move into the engaged position at alignment between the contact portion **36** of the lock member **16** and the reciprocal contact portion **40** on the sliding member. Between such positions of alignment the lock member **16** may be retained in the disengaged position despite the biasing force of the engagement actuator **17.** In an embodiment, the engagement actuator **17** may be a helical spring which at one end may abut a side of bracket **39** and, at the other end, may be coupled to the actuation portion **38** of the lock member **16.**

Disengagement actuator **18** acts on the actuation portion **38** of the lock member **16.** The disengagement actuator **18** effects a force on the lock member **16** to move to the disengaged position. In an embodiment, the force exerted by the disengagement actuator **18** may be in a direction counter to the force exerted by the engagement actuator **17.** The force exerted by the disengagement actuator **18** may be of a greater magnitude to overcome the force of the engagement actuator **17.**

The disengagement actuator **18** may be a hydraulically operated device, for instance a hydraulic cylinder. In another embodiment, the disengagement actuator may be a pneumatically operated device. In a further embodiment, the disengagement actuator may be a electronically operated device. The disengagement actuator may be installed within the bracket **39.**

At an aligned position between the contact portion **36** and the reciprocal contact portion **40,** the lock member **16** may be retracted from an engaged position to a disengaged position by the force exerted by the disengagement actuator **18.** The lock member **16** may be retained in the disengaged position till the disengagement actuator **18** ceases exerting a force on the actuation portion **38** and the force exerted by the engagement actuator **17** moves the lock member **16** to the engaged position.

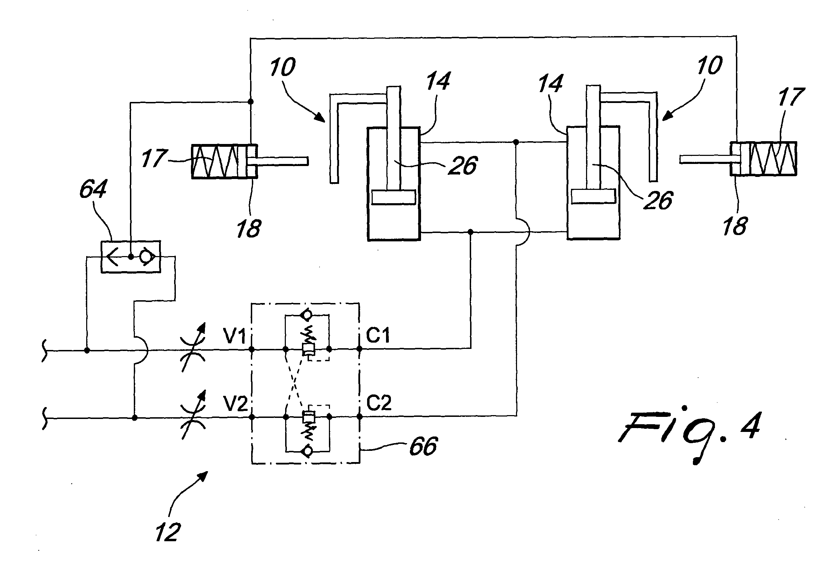

Fig. 4 illustrates a control circuit **12** for the control of the lock apparatus **10** and hydraulic cylinders **14** of a lateral carriage **58.** Control circuit **12** may be operably coupled to the hydraulic cylinder **14** and the disengagement actuator **18.** The control circuit **12** may be suitably connected to the hydraulic cylinder **14** and the disengagement actuator **18** for operation and control of the said components. The control circuit **12** may be suitably arranged to be activated from a cab of the vehicle so that the control circuit **12** may be operated by an operator positioned in the cab.

The hydraulic cylinder **14** and the disengagement actuator **18** may be hydraulically operated. The control circuit **12** may comprise a pump for pumping a hydraulic fluid and lines for flow of the hydraulic fluid to and from the hydraulic cylinder **14** and the disengagement actuator **18.** Operation of the hydraulic cylinder **14** and the *disengagement* actuator **18** may be effected through pressurisation of the hydraulic fluid in the lines connecting said components to the control circuit **12.** Activating the control circuit **12** may increase the pressure in the hydraulic lines, which may act on the hydraulic cylinder **14** and on the disengagement actuator **18.** The hydraulic pressure provides the force for the piston rod **26** to extend or retract and thereby correspondingly effect a movement in the variable gauge undercarriage **54** and for the disengagement actuator **18** to move the lock member **16** to the disengaged position.

The control circuit **12** may be configured such that upon activation, the disengagement actuator **18** may be operated prior to the operation of the hydraulic cylinder **14.** Specifically, the hydraulic pressure that may be provided to the hydraulic cylinder **14** and the disengagement actuator **18** actuates the lock member **16** before actuation of the piston rod **26.**

The control circuit **12** may be arranged to provide an equivalent hydraulic pressure simultaneously to the disengagement actuator **18** and the hydraulic cylinder **14.** Prior activation of the disengagement actuator **18** may be effected through the valves in the control circuit **12** as illustrated in hydraulic scheme Fig. 4.

In an embodiment, an actuator valve **64** may control hydraulic fluid flow to the disengagement actuator **18** and cylinder valves **66** may control hydraulic flow to the hydraulic cylinders **14.** The actuator valve **64** may have a lower pressure threshold than the cylinder valve **66.** At activation of the control circuit **12,** hydraulic pressure therein may increase. The increase in hydraulic pressure may act on the actuator valve **64** and the cylinder valves **66** simultaneously. Due to its lower pressure threshold, the actuator valve **64** may permit flow of the hydraulic fluid, for operation of the disengagement actuator **18,** prior to the cylinder valves **66.** As pressure increases in the hydraulic lines the cylinder valves **66** may permit flow of the hydraulic fluid, for operation of the hydraulic cylinders **14.** At deactivation of the control circuit **12,** the hydraulic pressure therein may decrease. The hydraulic pressure may decreases in the disengagement actuator **18** and the hydraulic cylinders **14.** The hydraulic fluid in the disengagement actuator **18** may be discharged by the action of the engagement actuator **17.**

The skilled person would comprehend the specific operation of the control circuit **12** from Fig. 4.

In another embodiment, the control circuit **12** may be arranged to provide an equivalent hydraulic thrust sequentially to the disengagement actuator **18** and the hydraulic cylinder **14.** Particularly, the control circuit **12** may be arranged to provide a hydraulic pressure to the disengagement actuator **18** prior to the hydraulic cylinder **14.**

In yet another embodiment, the control circuit **12** may comprise a hydraulic system for operation of the hydraulic cylinder **14** and a pneumatic system for operation of the disengagement actuator **18.**

With reference to Fig.2 which does not describe the invention, the lock apparatus **10** may further comprise a first sensor **48** and a second sensor **50.** Information obtained through the first and second sensors may be relayed to the cabin of a vehicle.

First sensor **48** monitors the position, for mere illustration of bar **42** of rail **20.** By detection of the position of bar **42,** the extended or retracted position of the variable gauge undercarriage **54** may be inferred. An extended or retracted bar **42** may indicate that the variable gauge undercarriage **54** is in a corresponding extended or retracted position. The first sensor **48** may also detect an intermediate position of the bar **42** and the variable gauge undercarriage **54.** First sensor **48** may be located externally of hydraulic cylinder **14** along barrel **22.** The first sensor **48** may be aligned with the longitudinal axis of the bar **42.**

The second sensor **50** may monitor the position of the lock member **16.** The second sensor **50** may detect if the lock member is in the engaged or disengaged position. Second sensor **50** may be located over bracket **39** and may be aligned to the lock member 16.

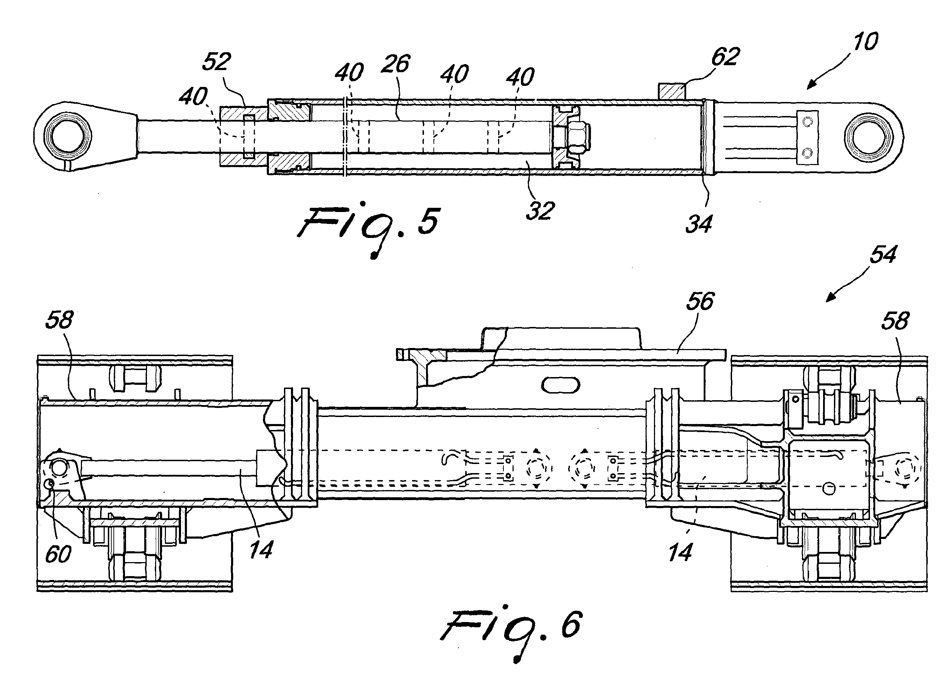

Fig. 5 illustrates the lock apparatus **10** of the invention wherein the sliding member is the piston rod **26.** The barrel **22** of the hydraulic cylinder **14** may comprise a projection **52** extending longitudinally from the barrel **22.** The lock member **16,** engagement actuator **17** and disengagement actuator **18** may be positioned within the projection **52.** The engagement actuator **17** and disengagement actuator **18** may operate as described above.

The piston rod **26** may comprise a reciprocal contact portion **40.** The piston rod **26** may comprise a series of reciprocal contact portions **40.** In another embodiment, the series of reciprocal contact portions **40** may include terminal positions at both ends of the piston rod **26** and an intermediate position partway between the two terminal positions. In another embodiment, further intermediate reciprocal contact portions **40** may be provided on the piston rod **26.**

The lock member **16** couples to the piston rod **26** in the engaged position to restrict extension or retraction thereof. Restricting longitudinal movement of the piston rod **26** may also restrict extension or retraction in the variable gauge undercarriage **54.** With the contact portion **36** of the lock member **16** in an engaged position with piston rod **26** the variable gauge track may be locked in a specific position. This position may be one of a series of positions which correspond to the positions of the reciprocal contact portions **40** along the piston rod **26.** In a specific embodiment, the positions may be the two terminal positions and the intermediate position.

A sensor **62** may monitor the position of piston rod **26.** By detection of the position of piston rod **26,** the extended or retracted position of the variable gauge undercarriage **54** may be inferred. An extended or retracted piston rod **26** indicates that the variable gauge undercarriage **54** may be in an extended or retracted position. The sensor **62** may also detect an intermediate position of the piston rod **26** and the variable gauge undercarriage **54.**

Sensor **62** may be located externally of hydraulic cylinder **14** along barrel **22**

Fig. 6 illustrates an variable gauge undercarriage **54** for a vehicle comprising lock apparatus **10** of the present disclosure. Variable gauge undercarriage **54** comprises a central chassis **56** and two lateral carriages **58.** Each carriage **58** may move relative the central chassis **56** by actuation of two independent hydraulic cylinders **14.** Each hydraulic cylinder **14** may produce the actuation to extend or retract the variable gauge undercarriage by moving each lateral carriage **58.**

By supplying hydraulic cylinders **14** with the appropriate hydraulic pressure, said cylinders **14** may move the lateral carriages **58.** Extension of the hydraulic cylinders **14** may cause a corresponding movement of the lateral carriages **58** from the central chassis **56.** Conversely, a retraction of the hydraulic cylinders **14** may cause a corresponding movement of the lateral carriages **58** towards the central chassis **56.**

Supports **60** may be provided in each of the lateral carriages **58.** Each support **60** may couple to and retain each hydraulic cylinder **14.** Guides that may be provided on the ends of a central chassis **56** and two lateral carriages **58** may be of the prism-shaped type and may ensure the required alignment among the telescopic components.

Fig. 6 illustrates the two extreme conditions of a variable gauge undercarriage **54:** a lateral carriage **58** in a retracted position and a lateral carriage **58** in an extended position.

The subdivision in terms of breadth of these sliding movements among the various parts may be adjusted by virtue of the stroke limiting lock apparatus **10.**

In operation, with the lateral carriages **58** in the retracted positions the control circuit **12** may be activated to extend one or both of the lateral carriages **58** to an intermediate or to the extended positions. Upon activation pressure may be increased in the hydraulic lines leading to the disengagement actuator **18** and the hydraulic cylinders **14.** The increased pressure may act on the disengagement actuator **18** to move the lock member **16** from engagement with the sliding member in the engaged position to the disengaged position. With the lock member **16** in the disengaged position, further increase in pressure in the hydraulic lines may activate a hydraulic cylinder **14** to extend a corresponding lateral carriage **58** to the desired position. The position may correspond to one of a series of reciprocal contact portions **40.** As the hydraulic cylinder extends, the lock member **16** may be retained in the disengaged position by the disengagement actuator **18.**

At the desired position the control circuit may be deactivated and the pressure in the hydraulic lines decreases. At a decreased pressure hydraulic cylinder **14** may stop extending. As the pressure decreases further the disengagement actuator **18** may release the lock member **16.** The lock member **16** may move into the engaged position to couple to the sliding member if the contact portion **36** may be aligned with a reciprocal contact portion **40.**

The method for retracting a lateral carriage **58** may operate as in the extension of a lateral carriage **58.**

Sensors **48, 50** and **62** may monitor the movements of the sliding member and the lock member **16** and relay the information to the operator in the cabin.

### Industrial Applicability

This disclosure describes a lock apparatus **10** for a variable gauge track laying vehicle.

In the operation of variable gauge track vehicle, the tracks may be extended or retracted according to work or external requirements, by hydraulic cylinders. The tracks may be retracted during transportation of the vehicle and extended at the work site. The tracks may be extended to the maximum positions or intermediate positions as required. The lock apparatus **10** actively engages to restrict movement of the tracks. To effect further gauge variation, the lock apparatus **10** is disengaged prior to extension or retraction of the tracks.

The industrial applicability of the lock apparatus **10** as described herein will have been readily appreciated from the foregoing discussion.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A lock apparatus (10) for a hydraulic cylinder of a variable gauge undercarriage comprising:
a lock member (16) to engage a sliding member (26), longitudinal movement of the sliding member (26) relative to the lock member determines the width of the variable gauge undercarriage;
an engagement actuator (17) to bias the lock member (16) to an engaged position; and
a disengagement actuator (18) operably coupled to a control circuit (12) and connected to the lock member (16) for disengaging the lock member (16) from the sliding member (20, 26) **characterised in that** the sliding member (26) is a piston rod of the hydraulic cylinder.

2. The lock apparatus according to claim 1, wherein the sliding member (26) is operably coupled to the control circuit (12) and the control circuit is arranged to hydraulically activate the disengagement actuator (18) prior to activation of the sliding member (26).

3. The lock apparatus according to claim 1 or 2 wherein the control circuit (12) hydraulically controls the disengagement actuator (18).

4. The lock apparatus according to claim 2 or 3 wherein the disengagement actuator (18) receives an actuation pressure prior to the sliding member (26).

5. The lock apparatus according to any of the preceding claims, wherein the sliding member comprises at least one reciprocal contact portion (40) for engagement to a contact portion (36) of the lock member (16).

6. The lock apparatus according to claim 5 wherein the contact portion is a pin and the reciprocal contact portion (40) is a bore.

7. The lock apparatus according to claim 5 wherein the contact portion is a clamp and the reciprocal contact portion (40) is a cleft.

8. The lock apparatus according to any one of the preceding claims further comprising a first sensor (48, 62) to detect the position of the lock member.

9. The lock apparatus according claim 8 further comprising a second sensor (50) to detect the position of the sliding member (26).

10. The lock apparatus according to any one of the preceding claims wherein engagement actuator is a spring.

11. A variable gauge vehicle comprising a lock apparatus according to any one of the preceding claims.

## Patentansprüche

1. Eine Verriegelungsvorrichtung (10) für einen Hydraulikzylinder eines Untergestells mit veränderlicher Spurweite, die Folgendes umfasst:
ein Verriegelungsglied (16) zum Eingreifen in ein gleitendes Glied (26); die Längsbewegung des gleitenden Glieds (26) relativ zum Verriegelungsglied bestimmt die Breite des Untergestells mit veränderlicher Spurweite;
einen Eingriffsaktor (17) zum Vorspannen des Verriegelungsglieds (16) in eine Eingriffsposition; und
einen Lösungsaktor (18), der operativ mit einem Steuerkreis (12) gekoppelt und mit dem Verriegelungsglied (16) verbunden ist, um das Verriegelungsglied (16) von dem gleitenden Glied (20, 26) zu lösen, **dadurch gekennzeichnet, dass** das gleitende Glied (26) eine Kolbenstange des Hydraulikzylinders ist.

2. Die Verriegelungsvorrichtung gemäß Anspruch 1, worin das gleitende Glied (26) operativ mit dem Steuerkreis (12) gekoppelt und der Steuerkreis angeordnet ist, um den Lösungsaktor (18) vor der Aktivierung des gleitenden Glieds (26) hydraulisch zu aktivieren.

3. Die Verriegelungsvorrichtung gemäß Anspruch 1 oder 2, worin der Steuerkreis (12) den Lösungsaktor (18) hydraulisch steuert.

4. Die Verriegelungsvorrichtung gemäß Anspruch 2 oder 3, worin der Lösungsaktor (18) einen Betätigungsdruck früher als das gleitende Glied (26) empfängt.

5. Die Verriegelungsvorrichtung gemäß einem beliebigen der obigen Ansprüche, worin das gleitende Glied mindestens einen Abschnitt (40) gegenseitigen Kontakts für den Eingriff in einen Kontaktabschnitt (36) des Verriegelungsglieds (16) umfasst.

6. Die Verriegelungsvorrichtung gemäß Anspruch 5, worin der Kontaktabschnitt ein Stift ist und der Abschnitt (40) gegenseitigen Kontakts eine Bohrung ist.

7. Die Verriegelungsvorrichtung gemäß Anspruch 5, worin der Kontaktabschnitt eine Klemme ist und der Abschnitt (40) gegenseitigen Kontakts ein Schlitz ist.

8. Die Verriegelungsvorrichtung gemäß einem beliebigen der obigen Ansprüche, die weiter einen ersten Sensor (48, 62) zur Erfassung der Position des Verriegelungsglieds umfasst.

9. Die Verriegelungsvorrichtung gemäß Anspruch 8, die weiter einen zweiten Sensor (50) zur Erfassung der Position des gleitenden Glieds (26) umfasst.

10. Die Verriegelungsvorrichtung gemäß einem beliebigen der obigen Ansprüche, worin der Eingriffsaktor eine Feder ist.

11. Ein Fahrzeug mit veränderlicher Spurweite, das eine Verriegelungsvorrichtung gemäß einem beliebigen der obigen Ansprüche umfasst.

## Revendications

1. Appareil de verrouillage (10) pour un cylindre hydraulique d'un train roulant à écartement variable, comprenant :
un élément de verrouillage (16) pour venir en prise avec un élément de coulissement (26), un mouvement longitudinal de l'élément de coulissement (26) par rapport à l'élément de verrouillage déterminant la largeur du train roulant à écartement variable ;
un actionneur de prise (17) pour solliciter l'élément de verrouillage (16) en une position en prise ; et
un actionneur de désengagement (18) couplé de façon fonctionnelle à un circuit de commande (12) et relié à l'élément de verrouillage (16) de façon à désengager l'élément de verrouillage (16) de l'élément de coulissement (20, 26), **caractérisé en ce que** l'élément de coulissement (26) est une tige de piston du cylindre hydraulique.

2. Appareil de verrouillage selon la revendication 1, dans lequel l'élément de coulissement (26) est couplé de façon fonctionnelle au circuit de commande (12) et le circuit de commande est agencé de façon à activer hydrauliquement l'actionneur de désengagement (18) avant l'activation de l'élément de coulissement (26).

3. Appareil de verrouillage selon la revendication 1 ou 2, dans lequel le circuit de commande (12) commande hydrauliquement l'actionneur de désengagement (18).

4. Appareil de verrouillage selon la revendication 2 ou 3, dans lequel l'actionneur de désengagement (18) reçoit une pression d'actionnement avant l'élément de coulissement (26).

5. Appareil de verrouillage selon l'une quelconque des revendications précédentes, dans lequel l'élément de coulissement comprend au moins une partie de contact à va-et-vient (40) pour une mise en prise avec une partie de contact (36) de l'élément de verrouillage (16).

6. Appareil de verrouillage selon la revendication 5, dans lequel la partie de contact est une broche et la partie de contact à va-et-vient (40) est un alésage.

7. Appareil de verrouillage selon la revendication 5, dans lequel la partie de contact est une pince et la partie de contact à va-et-vient (40) est une échancrure.

8. Appareil de verrouillage selon l'une quelconque des revendications précédentes, comprenant de plus un premier capteur (48, 62) pour détecter la position de l'élément de verrouillage.

9. Appareil de verrouillage selon la revendication 8, comprenant de plus un deuxième capteur (50) pour détecter la position de l'élément de coulissement (26).

10. Appareil de verrouillage selon l'une quelconque des revendications précédentes, dans lequel l'actionneur de prise est un ressort.

11. Véhicule à écartement variable comprenant un appareil de verrouillage selon l'une quelconque des revendications précédentes.
